# EUROPEAN PATENT APPLICATION

(11) **EP 3 725 852 A1**
(43) Date of publication of application: **21.10.2020**
(21) Application number: 19169315.9
(22) Date of filing: 15.04.2019
(51) Int. Cl.: C09D 11/101, C09D 11/322, C09D 11/38, C09D 11/40

(54) **CATIONICALLY CURABLE INKJET COMPOSITION**

(71) Applicant: A.M. Ramp & Co. GmbH, 65817 Eppstein (DE)
(72) Inventor: THAUFELDER, Harald, 65779 Kelkheim (DE)
(74) Representative: Reitstötter Kinzebach

(57) **Abstract**

A cationically curable inkjet composition comprising: a) at least one non-silyl cationically curable monomer having one or more cationically curable functional groups selected from epoxide groups, oxetane groups, oxolane groups, 1,3-dioxolane groups and vinyl ether groups; b) a silyl component comprising an epoxide group and a trialkoxysilyl group; and c) a cationic photoinitiator; wherein the molar ratio of epoxide groups of the silyl component b) to the cationically curable functional groups of the cationically curable monomer a) is in the range of 0.05 to 0.55. The inkjet compositions exhibit strong adherence, scratch resistance and chemical resistance on a wide range of substrate types. The invention further relates to a process of decorating a glass, ceramic, metal or plastic substrate, comprising: i) inkjet printing a cationically curable inkjet composition as described above onto the substrate; and ii) initiating curing of the printed composition on the substrate by exposing the printed composition to radiation having a wavelength in the range of 200 to 450 nm.

## Description

The present invention relates to a cationically curable inkjet composition and a process of decorating a glass, ceramic, metal or plastic substrate.

During inkjet printing, a digital image is reproduced by contact-free application of ink onto a substrate via ejection through a nozzle. The application of the ink is usually followed by a step of curing the ink on the substrate, e.g., by exposing the ink to ultraviolet (UV) radiation.

UV curable inkjet compositions are generally known in the art. For example, WO 2007/017644 A1 describes a cationic inkjet ink comprising a cationically curable component comprising at least one oxirane, cyclic ester or cyclic carbonate monomer, as well as an iodonium salt photoinitiator and a sensitizer.

WO 2009/118507 A1 relates to a process of decorating a glass or ceramic substrate, wherein a composition comprising a compound having a reactive silyl group is inkjet printed onto a substrate. The composition may further comprise a polymerizable monomer that does not include a reactive silyl group.

US 5,656,336 describes a method for applying a decoration to a glass substrate comprising applying an ink composition including a bis phenol-A epoxy resin to the substrate. The composition may comprise an adhesion promoter, such as an organofunctional silane.

WO 2007/021917 A2 describes inkjet compositions comprising a cationic reagent, a photoinitiating system, a sulfide component and a colorant. The cationic reagent may comprise a siloxane epoxide compound.

Depending on the type of substrate to which the inkjet composition is applied, forming a film with favorable properties such as strong adherence and scratch resistance may be difficult. This is especially true for non-porous substrates such as glass, ceramic and metal substrates, e.g., glass bottles or ceramic dishes.

In addition, the cured film is required to exhibit chemical resistance in the presence of substances such as water, ethanol and soaps, or mixtures thereof. This is especially important for articles of daily use which should maintain an appealing appearance even after prolonged use but are subjected to frequent cleaning e.g., in automatic dishwashers.

It is an object of the invention to provide inkjet compositions exhibiting strong adherence, scratch resistance and chemical resistance on a wide range of substrate types.

The object is achieved by a cationically curable inkjet composition comprising:
a) at least one non-silyl cationically curable monomer having one or more cationically curable functional groups selected from epoxide groups, oxetane groups, oxolane groups, 1,3-dioxolane groups and vinyl ether groups;
b) a silyl component comprising an epoxide group and a trialkoxysilyl group; and
c) a cationic photoinitiator;
wherein the molar ratio of epoxide groups of the silyl component b) to the cationically curable functional groups of the cationically curable monomer a) is in the range of 0.05 to 0.55.

It was found that the inkjet composition of the invention upon curing forms a film which strongly adheres to non-porous substrates such as glass, ceramic and metal substrates, and which exhibits a high degree of scratch resistance and chemical resistance.

The cationically curable inkjet composition comprises at least one non-silyl cationically curable monomer having one or more cationically curable functional groups selected from epoxide groups, oxetane groups, oxolane groups, 1,3-dioxolane groups and vinyl ether groups. The term "non-silyl" indicates a compound that does not include a silicon atom.

Suitable cationically curable monomers comprising at least one epoxide group include:

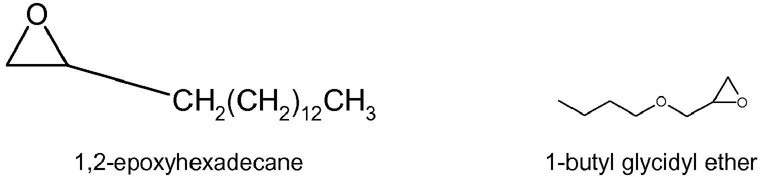

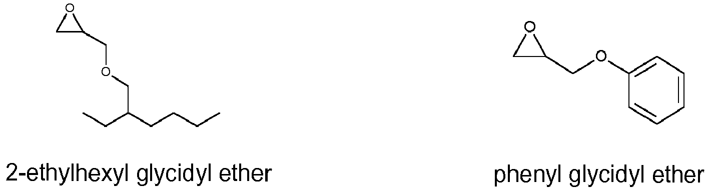

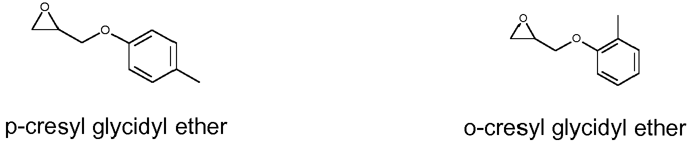

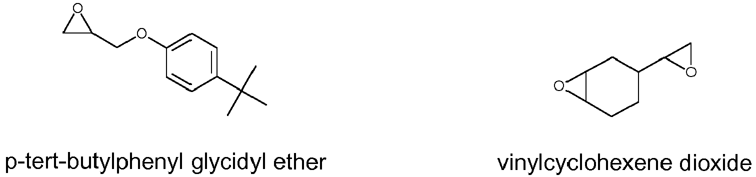

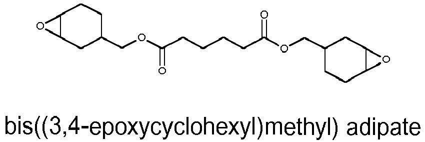

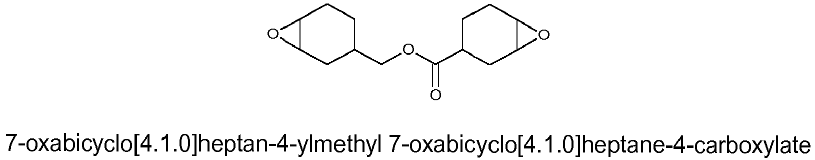

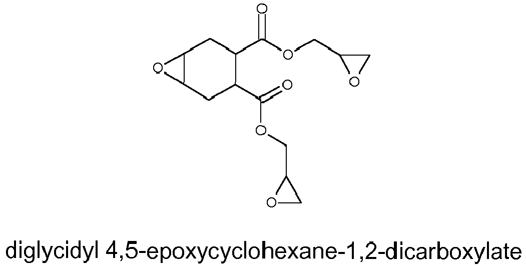

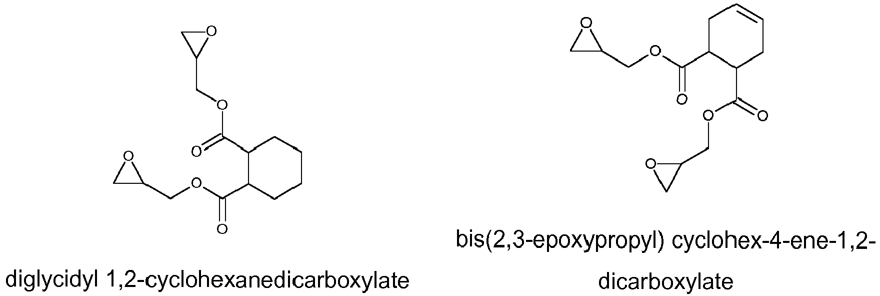

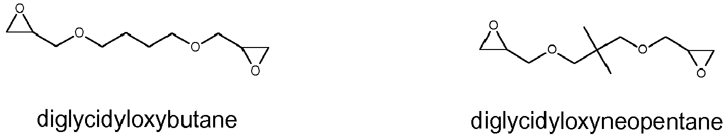

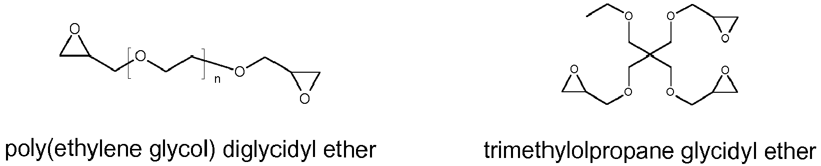

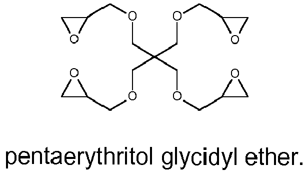

Suitable cationically curable monomers comprising at least one oxetane group include:

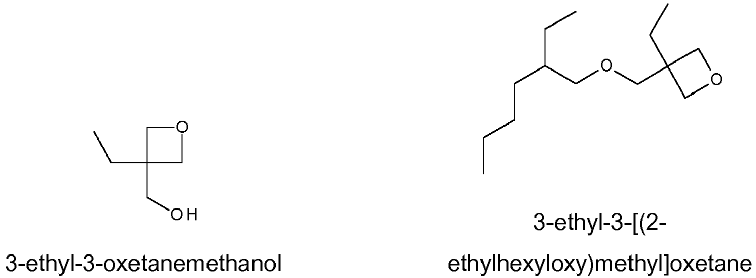

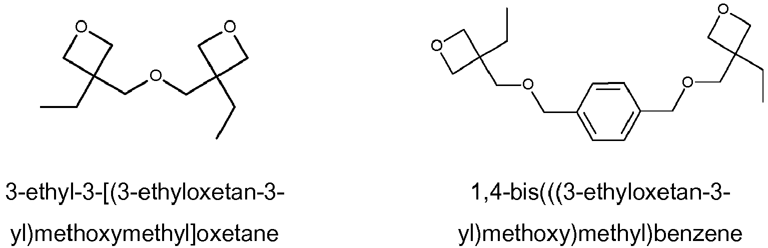

Suitable cationically curable monomers comprising at least one 1,3-dioxolane group include:

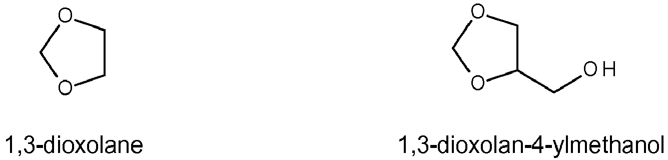

Suitable cationically curable monomers comprising at least one vinyl ether group include:

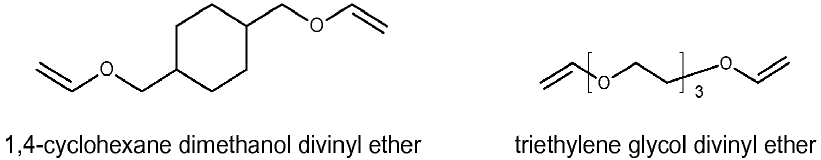

Preferably, the at least one non-silyl cationically curable monomer has one or more cationically curable functional groups selected from epoxide groups and oxetane groups.

In one embodiment, the cationically curable monomer comprises a monomer with at least two cationically curable functional groups. The cationically curable monomer preferably comprises a combination of cationically curable monomers.

The skilled person realizes that by varying the composition of the cationically curable monomer, the properties of the inkjet composition and/or the cured inkjet composition may be influenced. The choice of cationically curable monomer may affect, e.g., viscosity, vapor pressure and/or boiling point of the inkjet composition, as well as hardness and/or flexibility of the cured ink.

For example, the presence of bis((3,4-epoxycyclohexyl)methyl) adipate, which comprises two epoxide groups and two ester moieties, may lead to a faster curing of the composition as well as higher flexibility of the thus obtained film. The presence of 1,4-bis(((3-ethyloxetan-3-yl)methoxy)methyl)benzene, comprising two oxetane groups and two non-cyclic ether groups, can increase the reactivity and lower the viscosity of the inkjet composition, while increasing the hardness of the cured film. A composition comprising 3-ethyl-3-[(3-ethyloxetan-3-yl)methoxymethyl]oxetane, comprising two oxetane groups and one non-cyclic ether group, on the other hand, may exhibit low viscosity at high reactivity.

Generally, the inkjet composition comprises the at least one cationically curable monomer in an amount of 40 to 80% by weight, for example 50 to 70% by weight, preferably 55 to 65% by weight, based on the total weight of the inkjet composition.

In one embodiment, the cationically curable monomer a) comprises an epoxide comprising two epoxide moieties, such as 7-oxabicyclo[4.1.0]heptan-4-ylmethyl 7-oxabicyclo[4.1.0]heptane-4-carboxylate, and an oxetane comprising two oxetane moieties, such as 3-ethyl-3-[(3-ethyloxetan-3-yl)methoxymethyl]oxetane. Most preferably, the inkjet composition comprises 20 to 40% by weight of 7-oxabicyclo[4.1.0]heptan-4-ylmethyl 7-oxabicyclo[4.1.0]heptane-4-carboxylate and 20 to 40% by weight of 3-ethyl-3-[(3-ethyloxetan-3-yl)methoxymethyl]oxetane, based on the total weight of the inkjet composition. For example, the inkjet composition may comprise 25 to 35% by weight of 7-oxabicyclo[4.1.0]heptan-4-ylmethyl 7-oxabicyclo[4.1.0]heptane-4-carboxylate and 20 to 30% by weight of 3-ethyl-3-[(3-ethyloxetan-3-yl)methoxymethyl]oxetane, based on the total weight of the inkjet composition.

The cationically curable inkjet composition comprises a silyl component comprising an epoxide group and a trialkoxysilyl group. Preferably, the silyl component is a glycidoxyalkyltrialkoxysilane, such as

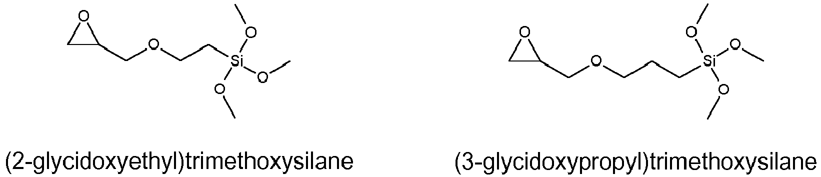

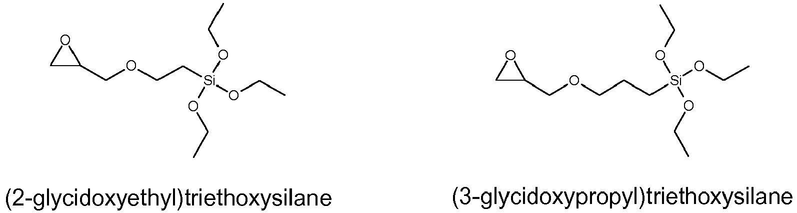

Most preferably, the silyl component is (3-glycidoxypropyl)trimethoxysilane.

The molar ratio of epoxide groups of the silyl component b) to the cationically curable functional groups of the cationically curable monomer a) is in a specific range. Without wishing to be bound by theory, it is assumed that the epoxide groups stemming from the silyl component are incorporated in the backbone formed by the cationic polymerization of the cationically curable monomer. The trialkoxysilyl group is highly reactive towards, on the one hand, hydroxy groups or other nucleophilic groups as are typically found on the substrate surface to which the inkjet composition may be applied. On the other hand, excess trialkoxysilyl groups react amongst each and other and form a siloxane network independently of the cationically polymerized network, resulting in a "hybrid" network in the cured film. These effects allow for a strong adherence of the cured to the substrate surface, as well as an increased scratch resistance and chemical resistance.

The molar ratio of epoxide groups of the silyl component b) to the cationically curable functional groups of the cationically curable monomer a) is in the range of 0.05 to 0.55. Preferably, the molar ratio of epoxide groups of the silyl component b) to the cationically curable functional groups of the cationically curable monomer a) is in the range of 0.15 to 0.45, such as 0.25 to 0.35.

Typically, the inkjet composition comprises the silyl component in an amount of 20 to 40% by weight, such as 25 to 35% by weight, based on the total weight of the inkjet composition.

The properties of the inkjet composition may be influenced by the choice of the silyl component, e.g., (3-glycidoxypropyl)trimethoxysilane has a relatively low viscosity.

The composition comprises a cationic photoinitiator. The cationic photoinitiator is capable of absorbing light, such as ultraviolet light, so as to provide an initiating compound capable of initiating polymerization of cationically curable functional groups, such as epoxide groups and oxetane groups. For example, some cationic photoinitiators generate a strong acid upon absorption of light. The strong acid can, e.g., initiate a ring opening reaction of an epoxide group or oxetane group, which in turn reacts with other cationically curable monomers present in the composition.

The cationic photoinitiator may be selected from:
diaryliodonium salts, especially diaryliodonium hexafluorophosphate salts and diaryliodonium hexafluoroantimonate salts or mixtures thereof, such as
   - Sylanto-7MP and Sylanto-7MS (both available from Synthos S.A.),
   - Speedcure 938 (available from Lambson),
   - Omnicat 250 and Omnicat 440 (both available from IGM Resins),
   - Deuteron UV 1240, Deuteron UV 1242, Deuteron UV 1250, Deuteron UV 3100 and Deuteron UV 2257 (all available from Deuteron), and
   - UV 9385 C and UV 9390 C (both available from General Electric),
arylsulfonium salts such as
   - Omnicat 270 (available from IGM Resins),
   - mixed triarylsulfonium hexafluoroantimonate and hexafluorophosphate salts, for example UVI 6992 and UVI 6974 (both available from Dow), and
   - Speedcure 992 and 976 (available from Lambson,
ferrocenium salts such as
   - R-gen 262 (available from Chitec), and
diazonium salts.

Preferably, the cationic photoinitiator is an diaryliodonium salt, especially an diaryliodonium hexafluorophosphate salt or a diaryliodonium hexafluoroantimonate salt or a mixture thereof. Most preferably, the cationic photoinitiator is selected from Sylanto-7MP, Sylanto-7MS, Speedcure 938, and Omnicat 440.

The inkjet composition may comprise the cationic photoinitiator in typical amounts, for example 0.5 to 7.0% by weight, preferably 1.5 to 6.0% by weight, based on the total weight of the inkjet composition.

In one embodiment, the inkjet composition comprises a sensitizer. The sensitizer absorbs light, such as ultraviolet light and/or visible light, and transfers energy to the cationic photoinitiator. This transfer of energy allows for the cationic photoinitiator, which generally absorbs light at shorter wavelengths than the sensitizer, to provide the initiating species capable of initiating polymerization of cationically curable functional groups. Thus, the presence of a sensitizer allows for provision of the initiating species upon exposure to radiation of longer wavelengths than in the absence of a sensitizer.

In one embodiment, the ink comprises a sensitizer in an amount of 0.01 to 3.0% by weight, for example 0.3 to 2.7% by weight, based on the total weight of the inkjet composition.

Sensitizers typically comprise at least one aromatic moiety and may be selected from anthracenes, pyracenes, xanthones and thioxanthones. Suitable examples include 9,10-diethoxy anthracene, 2-ethyl-9,10-dimethoxyanthracene, a mixture of 2-isopropylthioxanthone and 4-isopropylthioxanthone (Speedcure ITX), 1-chloro-4-propoxythioxanthone (Speedcure CPTX), 2,4-diethylthioxanthone (Speedcure DETX) and perylene.

Depending on the choice of cationic photoinitiator, a sensitizer may not be necessary in the inkjet composition. For example, Sylanto-7MP absorbs light at relatively long wavelengths of 365 nm and is usually capable of providing the initiating species upon exposure to typical wavelengths of light even in the absence of a sensitizer.

The cationic photoinitiator may slowly decompose, even in the absence of light, thus generating the initiating compound, e.g., a strong acid. The "dark" generation of the initiating compound may prematurely partially polymerize the inkjet composition, unfavourably increasing its viscosity over time, e.g., during storage of the inkjet composition. A stabilizer may counteract this process.

A stabilizer neutralizes the initiating compound generated by the cationic photoinitiator in the absence of light, thus reducing or altogether preventing polymerization of the inkjet composition in the dark. When the inkjet composition is exposed to light, especially ultraviolet light, the amount of initiating compound provided by the cationic photoinitiator suitably exceeds the maximum amount of initiating compound that the stabilizer may neutralize. Accordingly, while the stabilizer reduces or prevents polymerization of the inkjet composition in the dark, the inkjet composition is cured upon exposing it to light.

In one embodiment, the composition comprises a stabilizer d) selected from 2,2,6,6-tetramethylpiperidine derivatives. The amino group of the piperidine moiety is sterically hindered by the neighboring tertiary carbon moieties, and thus unlikely to react with the cationically curable monomer or the silyl component of the inkjet composition, which reduces the number of undesired side reactions. Favorably, the stabilizer may also reduce the degradation and increase the lightfastness of the cured film.

In one embodiment, the stabilizer comprises solely tertiary amino groups. Preferably, the stabilizer is a 1-alkyl-2,2,6,6-tetramethylpiperidine derivative. A "1-alkyl-2,2,6,6-tetramethylpiperidine derivative" is understood to designate a compound wherein the nitrogen atom of the piperidine moiety carries an exocyclic substituent bonded to the nitrogen atom via a carbon atom, e.g., a C₁-C₈-alkyl such as methyl or ethyl.

It is assumed that the nucleophilicity of tertiary amino groups is generally lower than that of secondary amino groups and especially lower than that of primary amino groups. Accordingly, compounds comprising solely tertiary amino groups are favorably less likely to react with the cationically curable monomer or the silyl component, thus reducing the number of undesired side reactions.

In one embodiment, the stabilizer has a molecular weight of at least 350 g/mol. Such stabilizers generally have a lower vapor pressure than lower molecular weight compounds in the same environment. Accordingly, stabilizers having a molecular weight of at least 350 g/mol are less likely to evaporate from the inkjet composition and the film obtained from the cured inkjet composition, which is favorable in view of both the stability of the inkjet composition, safety concerns regarding the cured film and absence of undesirable odors.

In one embodiment, the stabilizer is an ester of a 4-hydroxy-2,2,6,6-tetramethylpiperidine derivative and a monofunctional or polyfunctional carboxylic acid. The monofunctional or polyfunctional carboxylic acid is preferably selected from C₆-C₁₈ carboxylic acids. Preferably, the stabilizer is an ester of a 4-hydroxy-2,2,6,6-tetramethylpiperidine and a monofunctional or polyfunctional carboxylic acid derivative comprising solely tertiary amino groups.

In one embodiment, the stabilizer does not comprise hydroxy groups. Hydroxy groups may undergo unfavorable interaction with, e.g., the silyl component.

Preferred examples of suitable stabilizers include

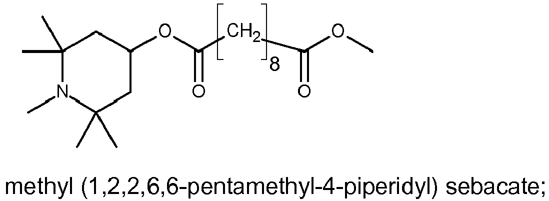

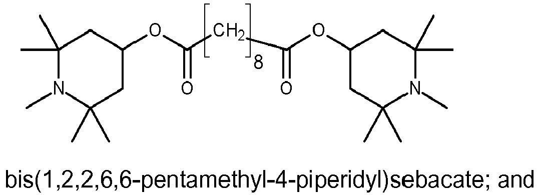

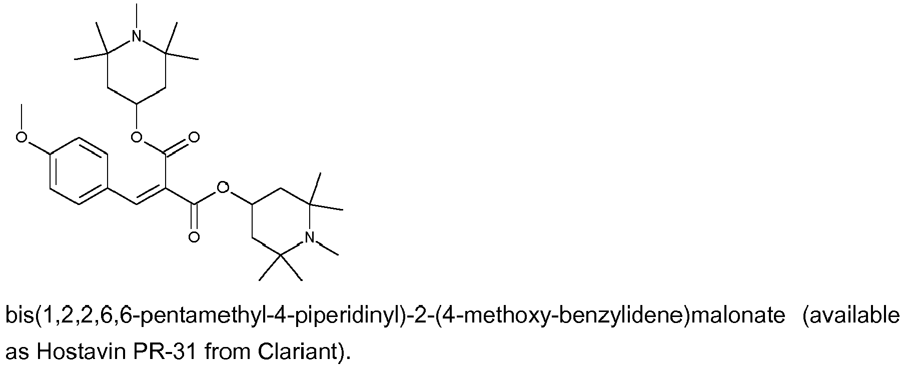

In one embodiment, the stabilizer is a mixture of methyl (1,2,2,6,6-pentamethyl-4-piperidyl) sebacate and bis(1,2,2,6,6-pentamethyl-4-piperidyl)sebacate (available as Tinuvin 292 from BASF).

The inkjet composition may comprise the stabilizer in typical amounts, for example 0.05 to 2.0% by weight, preferably 0.1 to 0.4% by weight, most preferably 0.2 to 0.35% by weight, based on the total weight of the inkjet composition.

The inkjet composition may comprise a pigment e). The presence of a pigment infers color and/or opacity to the film formed upon curing of the inkjet composition. The term "pigment" is understood to mean a colorant which is insoluble in the inkjet composition. The nature of the pigment is not especially restricted.

Suitable pigments are those commonly used in cationically curable compositions as described in the literature. Examples of suitable pigments include
inorganic pigments, such as
   - titanium dioxide pigments, like rutile pigments, for example Kronos 2190 (available from Kronos), and
   - carbon black pigments, for example Special Black 250 (available from Orion),
and organic pigments, such as
   - polycyclic pigments, such as phthalocyanine dyes, for example Heliogen Blue D 7110 F (available from BASF),
   - quinacridone pigments, for example Hostaperm-Red E2B 70 (available from Clariant), and
   - azo and diazo pigments, such as Inkjet Yellow 4GC (available from Clariant).

The amount of pigment in the inkjet composition is not especially limited. Typically, the inkjet composition includes an amount of pigment of at least 0.5% by weight, for example at least 2% or at least 4% by weight, based on the total weight of the inkjet composition. The amount of pigment in the inkjet composition is typically at most 20% by weight, such as at most 15% by weight or at most 10% by weight, based on the total weight of the inkjet composition.

In order to allow for a suitably high degree of dispersion of the pigment particles, the inkjet composition typically comprises a dispersing agent. The dispersing agent prevents the agglomeration of pigment particles and may be present in the inkjet composition in amounts in the range of 0.5% to 10% by weight, preferably 2% to 8% by weight, based on the total weight of the inkjet composition. The weight ratio of pigment to dispersing agent in the inkjet composition is typically in the range of 30:1 to 0.5:1, preferably in the range of 3:1 to 1:1.

The suitability of the dispersing agent for the inkjet composition is primarily dependent on the pigment. Dispersing agents are typically high molecular weight compounds comprising pigment affinic groups, such as amine moieties. Examples of dispersing agents include polyesters, such as Disperbyk-2152 (available from Byk) or Tego Dispers 685 (Evonik), polyetherphosphates, such as Tego Dispers 655 (Evonik); copolymers, such as Bykjet-9152 (available from Byk), and block copolymers, such as Disperbyk-168 (available from Byk). The suitable amount of dispersing agent varies depending on the pigment.

Alternatively, the inkjet composition does not comprise a pigment. In this case, the inkjet composition favorably allows for inkjet printing of a clear coating. Such a clear coating may be used to achieve glossy or matte effects on the entire substrate surface or specific areas of the substrate surface.

The inkjet composition may further comprise a surfactant. The surfactant may be used to adjust the surface tension of the inkjet composition so as to provide a composition suitable for printing. For example, droplet formation of the inkjet composition may be influenced by the surface tension. Suitably, the inkjet composition has a surface tension of 20 to 35 mN/m, preferably 28 to 32 mN/m, as measured at 25 °C in a tensiometer, such as a Krüss K9.

The surfactant is not especially limited and may be selected from anionic, cationic, non-ionic, zwitterionic and amphoteric surfactants. Preferably, the surfactants are selected from non-ionic surfactants, such as silicones, like hexamethyldisiloxane; silicon modified polymers, like polyether modified polydimethylsiloxanes, silicon modified polyacrylates, and polyether modified acrylated polydimethylsiloxanes; or fluorotensides.

In a preferred embodiment, the surfactant is selected from fluorotensides such as Chemguard S-550-100 (available from Chemguard). The surfactant may be comprised in amounts of 0.05% to 1 % by weight, preferably 0.1% to 0.5% by weight, based on the total weight of the inkjet composition.

The inkjet composition may comprise an inert organic solvent. The term "inert solvent" is understood to refer to solvents which do not participate in the cationic curing of the inkjet composition. For example, the cationically curable monomer, the silyl component, the cationic photoinitiator, the stabilizer and the pigment are all understood not to fall under the term "inert solvent". Inert solvents may be comprised in the inkjet composition so as to obtain a suitably low viscosity of the composition.

When the inkjet composition comprises an inert organic solvent, the inert organic solvent is preferably selected from hydrocarbons such as n-octane and mineral spirits; ethers such as glycol ethers, especially dipropylene glycol; esters such as ethyl acetate and butyl acetate; lactones such as γ-butyrolactone, δ-valerolactone and ε-caprolactone; sulfones such as sulfolane; and sulfoxides such as dimethyl sulfoxide (DMSO).

The inkjet composition may comprise an inert organic solvent in an amount of up 15% by weight, such as 1 to 15% by weight, preferably 2 to 5% by weight, based on the total weight of the inkjet composition.

In a preferred embodiment, the composition is essentially free of inert solvents. The term "essentially free" is understood to mean that the inkjet composition comprises less than 10% by weight, preferably less than 5% by weight, more preferably less than 3% by weight and most preferably less than 1% by weight of inert solvents, based on the total weight of the inkjet composition.

The composition may comprise further additives, such as flow control agents, defoamers, nanoparticles and droplet stabilizers. The amount of additives in the inkjet composition is typically in the range of 0.1 to 7.0% by weight, preferably 1.0 to 6.0% by weight, based on the total weight of the inkjet composition. For example, nanoparticles having a size between 1 and 100 nm may be added so as to achieve even higher scratch resistances.

Droplet stabilizers such as polyester resins may be added in amounts of 0.2 to 3% by weight, preferably 0.7 to 1.3% by weight, based on the total weight of the inkjet composition, so as to stabilize inkjet composition droplets of 3 to 50 picoliters, preferably 6 to 15 picoliters, during the flight from nozzle to substrate.

The inkjet composition suitably has chemical and physical properties that allow the inkjet composition to be jetted onto a substrate via one or more nozzles. Hence, the viscosity of the inkjet composition at typical inkjet printing temperatures between 25 °C and 60 °C, such as 45 °C, has to be suitably low. Preferably, the viscosity of the inkjet composition at 25 °C is in the range of 10 to 50 mPa·s, for example 15 to 35 Pa·s. Further, the inkjet composition preferably has a density in the range of 0.9 to 1.6 g/mL, more preferably 1.0 to 1.2 g/mL.

The inkjet composition is typically prepared by mixing a pigment concentrate, which comprises a pigment, a dispersing agent and a liquid diluent, with the remaining components of the inkjet composition.

Suitably, the liquid diluent comprised in the pigment concentrate is a component of the inkjet composition, such as the cationically curable monomer a). Preferably, only a fraction of the total amount of the component of the inkjet composition is used as the liquid diluent. Typically, the pigment concentrate comprises 5 to 25% by weight of pigment, 5 to 25% by weight of dispersing agent and 50 to 90% by weight of diluent, based on the total weight of the pigment concentrate. Preferably, the pigment concentrate comprises 10 to 20% by weight of pigment, 10 to 20% by weight of dispersing agent and 60 to 80% by weight of diluent, based on the total weight of the pigment concentrate.

The pigment concentrate is typically milled, for example in a bead mill or a basket mill. Milling of the pigment concentrate allows for uniform pigment particle sizes and a suitably high distribution of dispersing agents on the pigment particles. The concentration of pigment in the pigment concentrate is higher than in the final inkjet composition, thus allowing for a more efficient milling process.

Subsequently, the pigment concentrate and the remaining components of the inkjet composition are mixed, e.g., with a stirrer, to obtain the inkjet composition. After mixing, the inkjet composition is preferably filtered so as to remove unsuitably large pigment particles. Filtration may be important so as to allow free flow of the ink through an inkjet printing device and to avoid the clogging of components of the device, such as nozzles in the printhead. For example, the inkjet composition may be passed at least once through a filter which removes particles of a particle size larger than 3 µm.

In a preferred embodiment, the particle size distribution is below 1 µm (D90), more preferably below 0.5 µm. Such low particle size distributions favorably allow for suitably fine dispersions. The particle size distribution may be measured in a Dynamic Light Scattering Particle Size Distribution Analyzer, such as a Horiba LB-550.

Further provided is a process of decorating a glass, ceramic, metal or plastic substrate, comprising:
i) inkjet printing a cationically curable inkjet composition according to any of the preceding claims onto the substrate; and
ii) initiating curing of the printed composition on the substrate by exposing the printed composition to radiation having a wavelength in the range of 200 to 450 nm.

In one embodiment, the substrate is a glass substrate or a metal substrate. Preferably, the substrate is a glass substrate or a metal substrate. Suitable metal substrates include iron, steel and aluminium substrates. The advantageous properties of the inkjet composition are especially pronounced on these substrate types.

In one embodiment, the substrate is a glass substrate having a thickness of less than 225 µm, e.g., 25 to 200 µm. Such thin glass substrates are available from Schott.

In another embodiment, the substrate is a plastic substrate, i.e., a polymeric substrate. Suitable plastic substrates include rigid plastics, such as polypropylene, polyethylene and polyamide; and flexible plastic foils such as Melinex 339 (Du Pont), thermoplastic polyethersulfones (PES) like Melinex ST 504 (Du Pont), polyesterterephthalates like Hostaphan (Mitsubishi), polyethylenenaphthalenes (Teijin), and biaxially oriented polypropylene like Treofan TND (Jindal film).

Typically, the surface of the substrate is treated prior to inkjet printing so as to allow for an efficient binding of the inkjet composition to the substrate ("pretreatment"). The pretreatment may comprise removing contaminants, for example by contacting the surface of the substrate with an organic solvent or exposing it to a flame; or providing a higher concentration of functional groups suitable for reacting with the inkjet composition on the substrate surface, e.g., by depositing layers such as a silicon dioxide coating on the substrate surface, for example by Pyrosil treatment, or plasma treating the substrate surface, for example by Corona treatment.

Depending on the type of substrate, certain pretreatments may be preferred. For example, glass samples may be pretreated by depositing a silicon dioxide coating thereon, e.g., Pyrosil treatment, metal samples may be pretreated by cleaning the surface with an isopropanol soaked cotton cloth, rigid plastics may be pretreated by flaming and flexible plastic foils may be pretreated by plasma treatment, e.g., "Corona" pretreatment.

The step of inkjet printing the curable composition may be performed via any suitable inkjet printer, as known in the art. An inkjet printer typically comprises a printhead having a printhead ink reservoir, a nozzle, and an actuator (e.g., a heat source or piezoelectric element). In use, the actuator is actuated, e.g., by heating the inkjet composition and/or applying oscillatory energy, so as to eject the inkjet composition from the nozzle, typically in the form of droplets. The printed composition forms a layer on the substrate, which is subsequently cured by exposing it to radiation.

The initiation of curing of the printed composition on the substrate by exposing it to radiation having a wavelength in the range of 200 to 450 nm may be performed by any radiation source providing uniform light exposure of the specified wavelength over the desired area of the substrate. Suitable radiation sources include ultraviolet lamps and LED lamps. Recent developments have provided LED lamps capable of providing radiation at wavelengths of less than 300 nm, e.g., 275 nm, at suitable intensities.

Favorably, the printed composition may be exposed to radiation for only a short period of time to initiate curing. In one embodiment, the printed composition is exposed to radiation having a wavelength in the range of 200 to 450 nm for a period of time in the range of 0.2 to 20 s, preferably 0.5 to 1 s.

In one embodiment, the process of decorating a glass, ceramic, metal or plastic substrate comprises:
i') inkjet printing a first cationically curable inkjet composition according to any one of the above embodiments onto the substrate;
ii') initiating curing of the printed first composition by exposing the printed first composition to radiation having a wavelength in the range of 200 to 450 nm;
iii') inkjet printing a second cationically curable inkjet composition according to any one of the above embodiments at least partially onto a surface of the printed first composition on the substrate; and
iv') initiating curing of the printed second composition by exposing the printed second composition to radiation having a wavelength in the range of 200 to 450 nm.

The first cationically curable inkjet composition may differ from the second cationically curable composition especially with regard to its color. Favorably, the process comprises subsequently printing a white inkjet composition, at least one colored inkjet composition, a black inkjet composition, and optionally a clear inkjet composition, wherein curing of each printed composition is initiated prior to the inkjet printing of the subsequent inkjet composition. Printing one or more colored inkjet compositions at least partially over a white inkjet composition generally allows for brighter colors of the colored inkjet composition(s).

In one embodiment, the process comprises subsequently printing a white inkjet composition, three colored inkjet compositions having the color cyan, magenta and yellow, respectively, a black inkjet composition, and optionally a clear inkjet composition, wherein curing of each printed composition is initiated prior to the inkjet printing of the subsequent inkjet composition. The order of printing the cyan, magenta and yellow inkjet compositions is not especially limited.

In one embodiment, the process comprises subsequently printing a first white inkjet composition, a second white inkjet composition, three colored inkjet compositions having the color cyan, magenta and yellow, respectively, a black inkjet composition, and optionally a clear inkjet composition, wherein curing of each printed composition is initiated prior to the inkjet printing of the subsequent inkjet composition. The order of printing the cyan, magenta and yellow inkjet compositions is not especially limited. The first and second white inkjet compositions may be the same or different, preferably the same. Subsequently printing two white inkjet compositions allows for an especially high opacity.

Typically, the inkjet composition is printed onto a moving substrate, such as a sheet of metal or a rotating glass bottle. In a suitable arrangement for the present process, a substrate is guided along a horizontal axis. For example, a sheet of metal may be laid out on a conveyor belt. A first inkjet printhead is arranged so as to inkjet print a first inkjet composition onto the sheet of metal. Subsequently, a first radiation source, e.g. a UV-LED lamp, is arranged so as to initiate curing of the printed first inkjet composition. Then, a second inkjet printhead is arranged so as to inkjet print a second inkjet composition at least partially onto the surface of the printed first composition on the sheet of metal, and afterwards a second radiation source is arranged so as to initiate curing of the printed second inkjet composition.

The process steps of inkjet printing and initiating curing may be repeated as deemed appropriate. In one embodiment, a suitable arrangement for the present process comprises five inkjet printheads and five radiation sources arranged alternately so as to allow for inkjet printing and initiating curing of five inkjet compositions. In another embodiment, a suitable arrangement for the present process comprises six inkjet printheads and six radiation sources arranged alternately so as to allow for inkjet printing and initiating curing of six inkjet compositions. In yet another embodiment, a suitable arrangement for the present process comprises seven inkjet printheads and seven radiation sources arranged alternately so as to allow for inkjet printing and initiating curing of seven inkjet compositions.

In order to achieve a suitable degree of curing of the first printed composition prior to printing the second cationically curable inkjet composition and to avoid unfavorable blending of printed compositions, a certain period of time should pass between initiating curing of the printed first composition and inkjet printing the second cationically curable inkjet composition. In one embodiment, the time between initiating curing of the printed first composition and inkjet printing the second cationically curable inkjet composition is more than 0.2 s, preferably more than 0.3 s and most preferably more than 0.4 s.

On the other hand, in order to achieve a favorable adhesion between the printed compositions, a certain period of time should not be exceeded between initiating curing of the printed first composition and inkjet printing the second cationically curable inkjet composition. In one embodiment, the time between initiating curing of the printed first composition and inkjet printing the second cationically curable inkjet composition is less than 1 s. The present process advantageously allows for a fast printing of the inkjet composition onto the substrate.

In one embodiment, the time between initiating curing of the printed first composition and inkjet printing the second cationically curable inkjet composition is in the range of 0.2 s to 1.0 s, 0.3 s to 0.9 s and most preferably than 0.4 s to 0.8 s.

### Examples

Five cationically curable inkjet compositions comprising different pigments were prepared, as shown in the table below. The components of the compositions are provided in percent weight relative to the total weight of the inkjet composition.

The process for obtaining the cationically curable inkjet composition is illustrated in detail by example of the process for obtaining a cyan inkjet composition as follows:
A blue pigment concentrate was obtained by milling 225 g of the pigment (Heliogen Blue D 7110 F) and 225 g of the dispersing agent (Bykjet-9152) together with 525 g of 7-oxabicyclo[4.1.0]heptan-4-ylmethyl 7-oxabicyclo[4.1.0]heptane-4-carboxylate (Uvicure S105) and 525 g of 3-ethyl-3-[(3-ethyloxetan-3-yl)methoxymethyl]oxetane (Curalite OxPlus) in a basket mill (VMA-Getzmann GmbH, type AE4-M-EX, pearls diameter 0.9 to 1.1 mm) for 120 min. The pigment concentrate had a particle size distribution (D90) of 209 nm.

807.5 g of the blue pigment concentrate, 400 g of 7-oxabicyclo[4.1.0]heptan-4-ylmethyl 7-oxabicyclo[4.1.0]heptane-4-carboxylate, 357.5 g of 3-ethyl-3-[(3-ethyloxetan-3-yl)methoxymethyl]oxetane, 737.5 g of (3-glycidoxypropyl)trimethoxysilane, 25 g of Rad Active SB01, 5 g of Chemguard S-550-100, 5 g of Tinuvin 292, 125 g of Speedcure 938 and 37.5 g of Speedcure DETX were combined. The components were mixed for 30 min using a Pendraulik LD-50 stirrer to obtain the cyan inkjet composition.

The inkjet composition was filtrated twice via a PALL 3 µm filter system, using a filter of type 5EC4888389030J. The particle size distribution (D90) of the finished ink was 209 nm, as measured via a Dynamic Light Scattering Particle Size Analyzer (Horiba LB-550). The viscosity was 28 mPa·s at 20 °C and 13 mPa·s at 45 °C, as measured by a Modular Compact Rheometer (Paar Physica MCR 300). The static surface tension was 29.9 mN/m, as measured by a digital tensiometer (Krüss K9).

The other curable inkjet compositions were obtained analogously according to the table below.

| Component | Supplier | Functional Purpose | Inkjet Composition Color ¹ | | | | |
|---|---|---|---|---|---|---|---|
| | | | White | Cyan | Magenta | Yellow | Black |
| 7-oxabicyclo[4.1.0]heptan-4-ylmethyl 7 -oxabicyclo[4.1.0]heptane-4-carboxylate ² | Lambson | epoxide, monomer a) | 25.5 | 27.31 | 29.42 | 27.81 | 28.60 |
| 3-ethyl-3-[(3-ethyloxetan-3-yl)methoxymethyl]oxetane ³ | Perstorp | oxetane, monomer a) | 24.35 | 25.83 | 23.24 | 25.60 | 25.10 |
| (3-glycidoxypropyl)trimethoxysilane ⁴ | Evonic | silyl component b) | 30.5 | 29.5 | 30.0 | 30.0 | 30.0 |
| Kronos 2190 | Kronos | pigment (white) | 12.3 | - | - | - | - |
| Heliogen Blue D 7110 F | BASF | pigment (blue) | - | 4.85 | - | - | - |
| Hostaperm-Red E2B 70 | Clariant | pigment (red) | - | - | 4.85 | - | - |
| Inkjet Yellow 4GC | Clariant | pigment (yellow) | - | - | - | 4.85 | - |
| Special Black 250 | Orion | pigment (black) | - | - | - | - | 4.00 |
| Disperbyk-2152 | Byk | dispersing agent | 0.7 | - | - | - | - |
| Bykjet-9152 | Byk | dispersing agent | - | 4.85 | 1.94 | - | - |
| Disperbyk-168 | Byk | dispersing agent | - | - | - | 4.85 | - |
| Tego Dispers 685 | Evonik | dispersing agent | - | - | - | - | 2.26 |
| Rad Active SB01 | Kromachem | droplet stabilizer | 1.0 | 1.0 | 1.0 | 1.0 | 1.0 |
| Chemguard S-550-100 | Chemguard | surfactant | 0.05 | 0.20 | 0.30 | 0.40 | 0.50 |
| Tinuvin 292 | BASF | stabilizer | 0.20 | 0.20 | 0.20 | 0.20 | 0.20 |
| Speedcure 938 | Lambson | cationic photoinitiator | 5.0 | 5.0 | 5.0 | 5.0 | 5.0 |
| Speedcure DETX | Lambson | sensitizer | 0.40 | 1.50 | 1.50 | 1.50 | 2.50 |
| viscosity [mPa·s] at 20 °C / at 45 °C | | | 27 / 11 | 28 / 13 | 28 / 16 | 29 / 9 | 30 / 12 |
| static surface tension [mN/m] | | | 30.2 | 29.9 | 30.0 | 30.0 | 29.7 |
| molar ratio of epoxide groups of b) to cationically curable functional groups of a) | | | 0.31 | 0.28 | 0.28 | 0.28 | 0.28 |

| | | | | | | | |
|---|---|---|---|---|---|---|---|
| ¹values provided in percent weight, relative to the total weight of the inkjet composition ²Uvicure S105 ³Curalite OxPlus ⁴Dynasylan Glymo | | | | | | | |

The obtained inkjet compositions were examined in several tests.

### I. Degree of Sedimentation

The degree of sedimentation was examined by filling a measuring cylinder with 250 mL of ink, closing the cylinder with a plug, and covering the cylinder with aluminum foil so as to exclude light. No sedimentation was observed after a period of 6 months at room temperature (approximately 23 °C).

### II. Storage Stability

The storage stability of the inkjet compositions according to the table above was examined at 40 °C in a drying cabinet over a period of one month, which corresponds to storage at room temperature for approximately one year. The storage stability of the inkjet compositions was further examined at 55 °C over a period of one month. The viscosities were measured using a Modular Compact Rheometer (Paar Physica MCR 300). The following table shows the obtained results.

| Ink | Viscosity [mPa·s] * | | |
|---|---|---|---|
| T | | 40 °C | 55 °C |
| t | 0 (start) | 1 month | 1 month |
| White | 32 | 30 | 38 |
| Cyan | 30 | 32 | 37 |
| Magenta | 31 | 35 | 45 |
| Yellow | 29 | 33 | 39 |
| Black | 32 | 37 | 43 |

| | | | |
|---|---|---|---|
| * at 20 °C | | | |

No significant increase of viscosity was measured after the observed period of time.

The following table shows the optimization of the amount of stabilizer. As stabilizer, a mixture of methyl (1,2,2,6,6-pentamethyl-4-piperidyl) sebacate and bis(1,2,2,6,6-pentamethyl-4-piperidyl)sebacate (available as Tinuvin 292 from BASF) was used. The storage stability of the white inkjet compositions as described above was examined at 55 °C over a period of two months. The results are shown in the following table.

| Stabilizer (Tinuvin 292) [wt.-%] * | Viscosity [mPa·s] ** | | | |
|---|---|---|---|---|
| t | 0 (start) | 1 week | 1 month | 2 months |
| 0.0 | 35 | 36 | 45 | 545 |
| 0.05 | 33 | 35 | 44 | 130 |
| 0.1 | 32 | 33 | 42 | 104 |
| 0.2 | 32 | 34 | 38 | 49 |
| 0.3 | 32 | 32 | 37 | 47 |
| 0.4 | 32 | 33 | 38 | 48 |
| 0.5 | 30 | 32 | 39 | 47 |

| | | | | |
|---|---|---|---|---|
| *based on the total weight of the inkjet composition ** at 20 °C | | | | |

It is evident that when the amount of stabilizer in the inkjet composition is less than 0.2 wt.-%, the viscosity of the ink is significantly increased after a period of two months. When the amount of stabilizer in the inkjet composition is at least 0.2 wt.-%, the inkjet composition shows a high degree of stability even at high temperatures.

### III. Jettability

The jettability of all inkjet compositions was checked on printheads from Fujifilm (Spectra SE-128AA and Dimatix DMC-11610) and Xaar (Xaar 1003 GS6). The inks were tested under laboratory conditions for both Fujifilm printheads, at a printing speed of 0.5 to 2 m/min. The inks were further tested under production conditions for the Xaar printhead, at a printing speed of 10 to 20 m/min.

All inkjet compositions were found to be jettable via the examined printheads.

### IV. Properties of Printed Substrates

Glass substrates, i.e. microscope slides #1100420, 76 × 52 × 1 mm, uncoated (Paul Marienfeld GmbH), were pretreated by deposition of a silicon dioxide coating on the surface using Pyrosil coating set GVE2/HB from Sura Instruments GmbH, cartridge 2P.

The curing of the printed composition was initiated by exposing it to radiation having a wavelength of 395 nm at a dose of 350 mJ/cm² using a Hoenle PLD-module with 20 W/cm². The dose was measured by a UV-Integrator Actiprint LED-UV (Technigraf GmbH). All tests were performed at least 24 hours after initiation of curing.

The chemical resistance of the obtained substrates was tested in a number of experiments. For each individual experiment, freshly printed substrates were used.

In exposure tests, printed substrates were covered and exposed to shampoo (Axe Anti Hangover, Unilever, diluted in water in a weight ratio of 1:1), alcohol (94 wt.-% ethanol, 4 wt.-% water, 2 wt.-% ethyl acetate), olive oil (Cucina native olive oil extra, Aldi), and water (demineralized) in subsequent tests for 24 hours each. The covered substrates were placed under a glass dish so as to minimize evaporation and contamination. Afterwards, the printed substrates were wiped clean and checked for visible damage.

In boiling tests, printed substrates were submerged in water and boiled for 1.5 hours. Afterwards, the printed substrates were allowed to cool and checked for visible damage.

In dishwasher tests, printed substrates were submitted to a dishwasher run at 55 °C for 50 and 100 cycles. Afterwards, the printed substrates were allowed to cool and checked for visible damage.

In the chemical resistance tests, passing is defined as no visible damage to the coating being observed, whereas failing is defined as visible damage to the coating being observed, such as removal from the substrate.

The scratch resistance is tested by pencil test according to ASTM D3363-05, which is similar to ISO 15184.

The adhesion of the obtained coating on the printed glass was tested by a cross hatch tester according to DIN EN ISO 2409. Passing is defined as no damage to the coating being observed in a tape test according to DIN EN ISO 4624, whereas failing is defined as damage to the coating being observed, such as removal from the substrate.

Two yellow inkjet compositions, printed on glass substrates as described above, were examined with regard to their chemical and mechanical resistance. The inkjet compositions are summarized in the following table. Formulation 1 was prepared analogously to the yellow inkjet composition shown in the table above, whereas Formulation 2 is a comparative example which differs from the composition of Formulation 1 in the amounts of (3-glycidoxypropyl)trimethoxysilane, 7-oxabicyclo[4.1.0]heptan-4-ylmethyl 7-oxabicyclo[4.1.0]heptane-4-carboxylate and 3-ethyl-3-[(3-ethyloxetan-3-yl) methoxymethyl]oxetane.

| Component | Formulation 1 | Formulation 2¹ |
|---|---|---|
| (3-glycidoxypropyl)trimethoxysilane ² | 30 wt.-% | 2% wt.-% |
| 7-oxabicyclo[4.1.0]heptan-4-ylmethyl 7-oxabicyclo[4.1.0]heptane-4-carboxylate ³ | 27.81 wt.-% | 46.01 wt.-% |
| 3-ethyl-3-[(3-ethyloxetan-3-yl)methoxymethyl]oxetane ⁴ | 25.60 wt.-% | 35.3 wt.-% |
| molar ratio of epoxide groups of b) to cationically curable functional groups of a) | 0.28 | 0.01 |
| adhesion ⁵ | pass | fail (partly off) |
| scratch resistance ⁶ | 5H (glass) 6H (steel) | 3H (glass) 4H (steel) |
| chemical resistance (exposure test, alcohol) | pass | pass |
| chemical resistance (exposure test, olive oil) | pass | pass |
| chemical resistance (exposure test, water) | pass | pass |
| chemical resistance (exposure test, shampoo) | pass | pass |
| chemical resistance (boiling test, 1.5 h) | pass | fail (off) |
| chemical resistance (dishwasher test, 50 cycles) | pass | fail (partly off) |
| chemical resistance (dishwasher test, 100 cycles) | pass | fail (off) |

| | | |
|---|---|---|
| ¹comparative example ²Dynasylan Glymo ³Uvicure S105 ⁴Curalite OxPlus ⁵according to DIN EN ISO 2409 ⁶according to ASTM D3363-05 | | |

It is evident that Formulation 1 displays superior properties in comparison to Formulation 2.

Formulation 1 was also printed on metal substrates, i.e. stainless steel EN 1.4301 slides (76 × 52 × 1 mm), which were pretreated by cleaning the surface with an isopropanol soaked cotton cloth. The printed metal substrates were tested with regard to adhesion, scratch resistance and chemical resistance (dishwasher tests) analogously to the tests performed on the glass substrates described above. The printed metal substrates showed high scratch resistance and passed the adhesion test as well as both dishwasher tests.

## Claims

1. A cationically curable inkjet composition comprising:
a) at least one non-silyl cationically curable monomer having one or more cationically curable functional groups selected from epoxide groups, oxetane groups, oxolane groups, 1,3-dioxolane groups and vinyl ether groups;
b) a silyl component comprising an epoxide group and a trialkoxysilyl group; and
c) a cationic photoinitiator;
wherein the molar ratio of epoxide groups of the silyl component b) to the cationically curable functional groups of the cationically curable monomer a) is in the range of 0.05 to 0.55.

2. The composition according to claim 1, the composition further comprising:
d) a stabilizer selected from 2,2,6,6-tetramethylpiperidine derivatives.

3. The composition according to claim 2, wherein the stabilizer is a 1-alkyl-2,2,6,6-tetramethylpiperidine derivative.

4. The composition according to claim 2 or 3, wherein the stabilizer has a molecular weight of at least 350 g/mol.

5. The composition according to any of claims 2 to 4, wherein the stabilizer is an ester of a 4-hydroxy-2,2,6,6-tetramethylpiperidine derivative and a monofunctional or polyfunctional carboxylic acid.

6. The composition according to any of the preceding claims, wherein the silyl component is a glycidoxyalkyltrialkoxysilane, preferably glycidoxypropyltrimethoxysilane.

7. The composition according to any of the preceding claims, wherein the cationically curable monomer comprises a monomer with at least two cationically curable functional groups.

8. The composition according to claim 7, wherein the cationically curable monomer comprises a compound with at least two epoxide groups and a compound with at least two oxetane groups.

9. The composition according to any of the preceding claims, wherein the cationic photoinitiator is an iodonium salt.

10. The composition according to any of the preceding claims, the composition further comprising:
e) a pigment.

11. A process of decorating a glass, ceramic, metal or plastic substrate, comprising:
i) inkjet printing a cationically curable inkjet composition according to any of the preceding claims onto the substrate; and
ii) initiating curing of the printed composition on the substrate by exposing the printed composition to radiation having a wavelength in the range of 200 to 450 nm.

12. The process of claim 11, wherein the substrate is a glass substrate or a metal substrate,

13. The process of claim 12, wherein the substrate is a glass substrate having a thickness of less than 225 µm.

14. The process according to any one of claims 11 to 13, comprising:
i') inkjet printing a first cationically curable inkjet composition according to any one of claims 1 to 10 onto the substrate;
ii') initiating curing of the printed first composition by exposing the printed first composition to radiation having a wavelength in the range of 200 to 450 nm;
iii') inkjet printing a second cationically curable inkjet composition according to any one of claims 1 to 10 at least partially onto a surface of the printed first composition on the substrate; and
iv') initiating curing of the printed second composition by exposing the printed second composition to radiation having a wavelength in the range of 200 to 450 nm.

15. The process according to claim 14, wherein the time between initiating curing of the printed first composition and inkjet printing the second cationically curable inkjet composition is less than 1 s.
